# EUROPÄISCHE PATENTSCHRIFT

(11) **EP 1 747 561 B1**
(45) Veröffentlichungstag und Bekanntmachung des Hinweises auf die Patenterteilung: **16.12.2009**
(21) Anmeldenummer: 05745651.9
(22) Anmeldetag: 04.05.2005
(51) Int. Cl.: G21C 19/307

(54) **BINDEN VON RADIOAKTIVEM JOD IN EINEM KERNREAKTOR**
BONDING OF RADIOACTIVE IODINE IN A NUCLEAR REACTOR
LIAISON D'IODE RADIOACTIVE DANS UN REACTEUR NUCLEAIRE

(30) Priorität: 19.05.2004 DE 102004024722
(43) Veröffentlichungstag der Anmeldung: 31.01.2007
(73) Patentinhaber: EnBW Kraftwerke AG, 76661 Philippsburg (DE)
(72) Erfinder: RUEHLE, Wilfried, 69214 Eppelheim (DE); SCHMITT, Heribert, 67105 Schifferstadt (DE); SEIDER, Werner, 76707 Hambruecken (DE)
(74) Vertreter: Jany, Peter
(86) Internationale Anmeldenummer: PCT/EP2005/004844
(87) Internationale Veröffentlichungsnummer: WO 2005/117028

(56) Entgegenhaltungen:
- WO-A-02/073629
- WO-A-02/093586
- DE-A1- 2 651 313
- DE-A1- 3 100 112
- US-A- 4 312 647

## Beschreibung

Beim Betrieb von Kernreaktoren entsteht ständig radioaktives Jod (J-131). Jod ist leicht flüchtig und wird vom Menschen in der Schilddrüse eingelagert. Radioaktives Jod stellt deshalb eine erhebliche Gefahrenquelle für die menschliche Gesundheit dar.

Für Inspektions- und Wartungsarbeiten müssen Kernreaktoren in regelmäßigen Zeitabständen abgefahren und radioaktivitätsführende Systeme, beispielsweise das Kühlsystem und/oder der Reaktorkern, geöffnet werden. Um zu verhindern, daß dabei radioaktives Jod entweicht, sind aufwendige Absaugmaßnahmen notwendig, die mehrere Tage dauern können. Sind Brennstäbe defekt, so bilden sich vermehrt luftgetragene Jodverbindungen, was einen beträchtlich erhöhten Strahlenschutzaufwand erforderlich macht.

Die für Inspektions- und Wartungsarbeiten benötigte Zeit beruht zu einem erheblichen Teil auf den vor einem Öffnen radioaktivitätsführender Systeme erforderlichen Absaugmaßnahmen zum Strahlenschutz. Je länger die Zeitspanne zwischen einem Abfahren und einem erneuten Anfahren des Kernreaktors ist, desto höhere Kosten entstehen durch Produktionsausfälle, da in dieser Zeitspanne kein Strom produziert werden kann. Der Verkürzung der Stillstandszeiten eines Reaktors kommt daher eine sehr erhebliche wirtschaftliche Bedeutung zu.

Aufgabe der Erfindung ist es, einen Weg aufzuzeigen, wie einem Austreten von radioaktivem Jod aus einem Kernreaktor über den Luftpfad entgegengewirkt werden kann und Inspektions- und Wartungsarbeiten schneller durchgeführt werden können.

Die Aufgabe wird gelöst durch das im Anspruch 1 offenbarte Verfahren.

Durch die Verwendung eines Reduktionsmittels läßt sich in einem Kernreaktor einem Austreten von radioaktivem Jod entgegenwirken.

Während Jodmoleküle und jodhaltige Moleküle leicht flüchtig sind, bleiben Jodidionen auch bei hohen Temperaturen in wässriger Lösung und gehen nicht in eine darüberstehende Atmosphäre über. Bei einem vollständigen Verdunsten des Wassers bilden Jodidionen mit im Wasser enthaltenen Kationen, beispielsweise Natriumionen, nicht flüchtige Salze mit hohen Schmelzpunkten. Jodidionen lassen sich mit einem Ionentauscher aus der Wasserphase entfernen.

Gemäß der Lehre der vorliegenden Erfindung können durch Einsatz eines Reduktionsmittels Jodmoleküle und jodhaltige Verbindungen reduziert werden, so daß Jodidionen entstehen. Diese Vorgehensweise eignet sich insbesondere für Jod, das im Kühlwasser des Kernreaktors gelöst ist. Um Jod zu binden, das sich bereits in einer Gasphase befindet, kann ein Reduktionsmittel, bevorzugt eine organische Verbindung, in wässriger Lösung als eine Art Nebel versprüht werden. Herrschen in der Gasphase erhöhte Temperaturen, sind insbesondere auch Reduktionsmittel geeignet, die Jod durch eine Anlagerungsreaktion binden. Hierfür sind organische Verbindungen mit ungesättigten Bindungen (d.h. mit aromatischen Ringen oder Doppel- und Dreifachbindungen zwischen Kohlenstoffatomen), beispielsweise Butindiol, besonders gut geeignet.

Eine wichtige Erkenntnis der vorliegenden Erfindung liegt darin, daß es für die Erzielung eines Strahlenschutzes während der Durchführung von Inspektions- und Wartungsarbeiten nicht erforderlich ist, radioaktives Jod dauerhaft auch unter den Betriebsbedingungen des Reaktors zu binden. Statt dessen genügt es, wenn das radioaktive Jod für die Dauer der Wartungsarbeiten gebunden ist, bei denen radioaktivitätsführende Systeme geöffnet sind. Deshalb sind für die vorliegende Erfindung auch Stoffe wie Butindiol geeignet, die sich im Reaktorbetrieb durch Strahlungs- oder Temperatureinwirkung rasch zersetzen. Es stört nämlich nicht, wenn beispielsweise im Kühlkreislauf gebundenes Jod nach Abschluß der Wartungsarbeiten wieder frei wird, da es dann aus dem geschlossenen Kühlsystem nicht mehr entweichen kann.

Im Rahmen der vorliegenden Erfindung ist der Begriff "Binden" nicht in seinem engeren chemischen Sinne dahingehend zu verstehen, daß das radioaktive Jod mit dem Reduktionsmittel eine chemische Bindung eingehen muß. Es genügt, wenn das radioaktive Jod durch das Reduktionsmittel in irgendeiner Weise daran gehindert wird, in die Atmosphäre überzutreten. Beispielsweise kann das Jod als Jodidion in wässriger Lösung oder durch eine Anlagerungsreaktion, bei der es eine chemische Bindung mit dem Reduktionsmittel eingeht und sich zusammen mit ihm niederschlägt, gebunden werden.

Im Kühlsystem eines Leichtwasserreaktors werden im Betrieb Temperaturen von mehreren hundert Grad Celsius erreicht. Unter diesen Bedingungen können Fremdstoffe, insbesondere durch Korrosion, Schäden verursachen, weshalb sorgfältig darauf geachtet wird, daß verwendetes Kühlwasser möglichst frei von Verunreinigungen ist. Unter den Bedingungen des Reaktorbetriebs zersetzen sich organische Moleküle im Kühlkreislauf sehr rasch und können folglich eine Quelle für korrosive Fremdstoffe darstellen. Um Schäden zu vermeiden, sollte das erfindungsgemäße Reduktionsmittel deshalb möglichst frei von Halogenen und Schwefel sein, da sich sonst aus dem Reduktionsmittel korrosive Zersetzungsprodukte bilden können.

Überraschenderweise ist Kohlendioxid trotz seiner sauren Wirkung als Zersetzungsprodukt organischer Reduktionsmittel im Kühlwasserkreislauf eines Leichtwasserreaktors unkritisch, so daß problemlos organische Reduktionsmittel in Konzentrationen von einigen hundert Milligramm pro Kilogramm dem Kühlmittel zugesetzt werden können, was für ein effizientes Binden radioaktiven Jods mehr als ausreichend ist.

Versuche haben gezeigt, daß Kühlsysteme von Druckwasserreaktoren für Schäden durch Fremdstoffe wesentlich weniger anfällig sind als Kühlsysteme von Siedewasserreaktoren. Im Rahmen der Erfindung wurde herausgefunden, daß selbst stickstoffhaltige Reduktionsmittel, wie beispielsweise Hydrazin, im Kühlsystem eines Druckwasserreaktors zumindest in Konzentrationen von einigen zehn Milligramm pro Kilogramm Kühlwasser eingesetzt werden können, ohne daß durch stickstoffhaltige Zersetzungsprodukte Schäden verursacht werden.

Aus der DE 3100112 A1 ist die Verwendung von in Wasser unlöslicher Stärke als Filtermaterial bekannt, um elementares Jod aus zu reinigendem Wasser eines Kernkraftwerks zu entfernen.

Um Spannungskorrosion entgegenzuwirken ist es ferner aus der DE 10123690 A1 bekannt, dem Primärkühlmittel eines Siedewasserreaktors bei Betrieb einen Alkohol beizumischen.

Die Erfindung wird nachfolgend anhand von Ausführungsbeispielen näher erläutert. Die darin beschriebenen Besonderheiten können einzeln oder in Kombination miteinander eingesetzt werden, um bevorzugte Ausgestaltungen der Erfindung zu schaffen.

Wird ein Leichtwasserreaktor für Wartungsarbeiten abgeschaltet, bei denen radioaktivitätsführende Systeme, beispielsweise ein Kühlsystem, geöffnet werden müssen, besteht die Gefahr, daß gasgetragenes, radioaktives Jod austritt. Um einem Austreten von radioaktivem Jod aus dem Kühlsystem eines Druck- oder Siedewassersreaktors entgegenzuwirken, wird erfindungsgemäß bei einem Abfahren des Reaktors dem Kühlmittel ein Reduktionsmittel zugesetzt, welches das radioaktive Jod bindet oder zu Jodid, das nicht flüchtig ist und keine Neigung zum Übertritt in die Gasphase hat, reduziert.

Das Reduktionsmittel enthält als reduzierenden Bestandteil eine oder mehrere organische Verbindungen. Bevorzugt sind dabei Verbindungen, die eine oder mehrere ungesättigte Kohlenstoffbindungen enthalten, d.h. Doppel- oder Dreifachbindungen zwischen Kohlenstoffatomen, oder eine aromatische Gruppe. Besonders bevorzugt sind als reduzierender Bestandteil des Reduktionsmittels Verbindungen mit einem Molekulargewicht, das in Atommasseneinheiten weniger als 300 a.u., insbesondere weniger als 250 a.u., beträgt. Das Reduktionsmittel ist bevorzugt frei von Halogenen und Schwefel, d.h. es enthält Schwefel oder Halogene lediglich als Verunreinigungen oder Spuren, bevorzugt in einer Konzentration von weniger als 100 ppm.

Bevorzugt enthält das Reduktionsmittel als reduzierenden Bestandteil eine oder mehrere Verbindungen, die ausschließlich aus Kohlenstoff, Wasserstoff und Sauerstoff aufgebaut sind. Neben Kohlenwasserstoffen sind insbesondere Aldehyde, bevorzugt Hydrochinon, Resorcin und/oder Brenzkatechin, Alkohole und/oder Carbonsäuren, insbe-sondere Ascorbinsäure, geeignet. Das Reduktionsmittel wird dem Kühlmittel in einer Konzentration von mindestens 0,1 µmol/kg, vorzugsweise mindestens 0,5 µmol/kg zugesetzt. Konzentrationen von mehr als 1 mmol/kg sind allenfalls bei sehr schwachen Reduktionsmitteln für ein weitgehend vollständiges-Binden des radioaktiven Jods erforderlich, bringen aber, insbesondere bei Carbonsäuren, eine zunehmende Gefahr einer korrosiven Schädigung des Kühlsystems mit sich.

Im Abfahrbetrieb eines Kernreaktors und einem daran anschließenden Nachkühlbetrieb wird das Reduktionsmittel mehrfach nachdosiert, damit die Konzentration des Reduktionsmittels im Kühlmittel, bezogen auf seinen oder seine reduzierenden Bestandteil(e), nicht unter einen vorgegebenen Grenzwert von bevorzugt etwa 0,1 µmol/kg Kühlmittel absinkt. Auf diese Weise kann im Kühlsystem vorhandenes radioaktives Jod rasch und vollständig gebunden werden, so daß es bei einem anschließenden Öffnen des Kühlsystems nicht entweichen kann.

Da beim Abfahren eines Kernreaktors und dem daran anschließenden Nachkühlbetrieb die Temperatur im Kühlsystem des Reaktors stetig sinkt, kann es günstig sein, zu Beginn bei höheren Temperaturen ein anderes Reduktionsmittel einzusetzen als gegen Ende bei niedrigeren Temperaturen. Auf diese Weise kann stets ein Reduktionsmittel eingebracht werden, das zum Binden des radioaktiven Jods unter den jeweils herrschenden Bedingungen optimal geeignet ist.

Das Nachdosieren des Reduktionsmittels erfolgt nicht etwa deshalb, weil sich das Reduktionsmittel durch Reaktionen mit dem radioaktiven Jod verbraucht, sondern in erster Linie deshalb, weil es sich auch im Nachkühlbetrieb des Reaktors relativ rasch zersetzt oder über Reinigungsfilter entfernt wird.

Bei einem Siedewasserreaktor wird für flüssigkeitsführende Teile des Kühlsystems ein erstes Reduktionsmittel oder eine erste Komponente des Reduktionsmittels und für dampfführende Teile des Kühlsystems ein zweites Reduktionsmittel oder eine zweite Komponente des Reduktionsmittels eingesetzt. Als besonders geeignet hat sich für Siedewasserreaktoren eine Mischung aus Ascorbinsäure und Butindiol erweisen. Ascorbinsäure bleibt im flüssigkeitsführenden Teil des Kühlsystems und bindet dort radioaktives Jod, indem es dieses zu Jodionen reduziert. Butindiol wird vom Wasserdampf in dampfführende Teile des Kühlsystems mitgenommen, wo es sich auf freien Oberflächen, beispielsweise Turbinenblättern, absetzt und dort durch eine Anlagerungsreaktion radioaktives Jod aus der Gasphase bindet. Butindiol hat dabei zusätzlich den Vorteil, metallische Oberflächen in dampfführende Teilen des Kühlsystems vor Korrosion zu schützen. Ascorbinsäure und Butindiol werden dem Kühlmittel in wässriger Lösung jeweils in einer Konzentration von mindestens 0,1 mg/kg Kühlmittel, bevorzugt in einer Konzentration von 0,2 mg/kg Kühlmittel, zugesetzt. Dies entspricht einer Konzentration von 0,5 bis 1 µmol/kg Kühlmittel für die Ascorbinsäure und einer Konzentration von 0,25 bis 0,5 µmol/kg Kühlmittel für das Butindiol.

Ein weiteres Ausführungsbeispiel besteht darin, in radioaktivitätsführende Systeme, beispielsweise den Turbinenkondensator oder Dampfleitungen, feine Tröpfchen eines Reduktionsmittels, beispielsweise in Wasser gelöste Ascorbinsäure oder Quercetin, als Nebel einzusprühen. Die Konzentration der Ascorbinsäure oder des Quercetin in wässriger Lösung beträgt dabei 0,1 bis 1 mg/kg Wasser. Auf diese Weise kann sogar radioaktives Jod, das bereits in die Gasphase gelangt ist, gebunden werden.

Bei einem Austausch von Brennelementen kann einem Freiwerden von Jod entgegengewirkt werden, indem diese mit reduktionsmittelhaltigem Wasser bedeckt werden.

Für Inspektions- und Wartungsarbeiten muß ein Leichtwasserreaktor typischerweise einmal im Jahr für etwa fünfzehn bis fünfundzwanzig Tage stillgelegt werden. Bei einer Erprobung des beschriebenen Verfahrens konnte der Reaktor bereits fünf Tage früher wieder in Betrieb genommen werden. Dazu wurde beim Abfahren des Reaktors Butindiol in wässriger Lösung stündlich in einer Konzentration von 0,1 mg/kg Dampf in das Kühlsystem eingebracht. Etwa 10 Stunden nach dem Abschalten des Reaktors war die Temperatur im Kühlsystem soweit gesunken, daß die Dampfmenge nur noch etwa 10% des ursprünglichen Wertes betrug. Zu diesem Zeitpunkt wurde dem (flüssigen) Kühlwasser Ascorbinsäure in wässriger Lösung in einer Konzentration von 0,4 mg/kg Kühlmittel zugesetzt. Auf diese Weise konnte das Kühlsystem schon etwa 24 Stunden nach dem Abfahren des Reaktors geöffnet werden, während im Stand der Technik oft mehrere Tage lang Luft aus dem Kühlsystem abgepumpt werden muß, um ein Austreten radioaktiven Jods zu verhindern.

## Patentansprüche

1. Verfahren, bei dem ein Reduktionsmittel in das Kühlsystems eines wassergekühlten Kernreaktors eingebracht wird, **dadurch gekennzeichnet, dass** das Reduktionsmittel bei einem Abfahren des Reaktors und/oder einem daran anschließenden Nachkühlbetrieb in das Kühlsystem eingebracht wird, und
mittels des Reduktionsmittels radioaktives Jod während der Durchführung von Wartungsarbeiten bei geöffnetem Kühlsystems gebunden und das radioaktive Jod so daran gehindert wird, in die Atmosphäre überzutreten.

2. Verfahren nach Anspruch 1, wobei das Reduktionsmittel frei von Halogenen und Schwefel ist.

3. Verfahren nach einem der vorhergehenden Ansprüche, wobei das Reduktionsmittel als reduzierenden Bestandteil eine oder mehrere organische Verbindungen enthält.

4. Verfahren nach Anspruch 3, **dadurch gekennzeichnet, dass** die Verbindung ein Molekulargewicht von weniger als 300 a.u., vorzugsweise weniger als 250 a.u., hat.

5. Verfahren nach Anspruch 3 oder 4, wobei das Reduktionsmittel als reduzierenden Bestandteil eine oder mehrere Verbindungen enthält, die ausschließlich aus Kohlenstoff, Wasserstoff und Sauerstoff aufgebaut sind.

6. Verfahren nach Anspruch 5, wobei das Reduktionsmittel als reduzierenden Bestandteil einen oder mehrere Kohlenwasserstoffe enthält.

7. Verfahren nach einem der vorhergehenden Ansprüche, wobei das Reduktionsmittel als reduzierenden Bestandteil eine oder mehrere Verbindungen mit einer ungesättigten Kohlenstoffbindung enthält.

8. Verfahren nach einem der Ansprüche 2 bis 7, wobei der reduzierende Bestandteil ein Aldehyd, bevorzugt Hydrochinon, Resorcin und/oder Brenzkatechin, ein Alkohol und/oder eine Carbonsäure, bevorzugt Ascorbinsäure, ist.

9. Verfahren nach einem der vorhergehenden Ansprüche, wobei das Reduktionsmittel einem Kühlmittel zugesetzt wird.

10. Verfahren nach Anspruch 9, wobei das Reduktionsmittel einer flüssigen Phase des Kühlmittels zugesetzt wird.

11. Verfahren nach Anspruch 9 oder 10, wobei das Reduktionsmittel dem Kühlmittel in einer Konzentration von mindestens 0,1 µmol/kg, vorzugsweise mindestens 0,5 µmol/kg zugesetzt wird.

12. Verfahren nach einem der vorhergehenden Ansprüche, wobei für flüssigkeitsführende Teile des Kühlsystems ein erstes Reduktionsmittel oder eine erste Komponente des Reduktionsmittels und für dampfführende Teile des Kühlsystems ein zweites Reduktionsmittel oder eine zweite Komponente des Reduktionsmittels eingesetzt wird.

13. Verfahren nach einem der vorhergehenden Ansprüche, wobei im Nachkühlbetrieb zumindest ein weiteres Mal Reduktionsmittel zugesetzt wird.

14. Verfahren nach einem der vorhergehenden Ansprüche, wobei durch Nachdosieren von Reduktionsmittel einem Absinken der Konzentration des Reduktionsmittels in dem Kühlmittel unter einen vorgegebenen Wert von vorzugsweise 0,1 µmol/kg, besonders bevorzugt 0,5 µmol/kg, entgegengewirkt wird.

## Claims

1. Method in which a reducing agent is introduced into the cooling system of a water-cooled nuclear reactor, **characterized in that** the reducing agent is introduced into the cooling system during shutting down the reactor and/or during a subsequent after-cooling operation, and
radioactive iodine is bonded by the reducing agent during maintenance work while the cooling system is opened and by this the radioactive iodine is prevented from escaping into the atmosphere.

2. Method according to claim 1, wherein the reducing agent is free of halogens and sulfur.

3. Method according to any one of the preceding claims, wherein the reducing agent contains one or more organic compounds as reducing component.

4. Method according to claim 3, **characterized in that** the compound has a molecular weight of less than 300 a.u. and preferably of less than 250 a.u.

5. Method according to claim 3 or 4, wherein the reducing agent contains one or more compounds, which are built up exclusively from carbon, hydrogen and oxygen, as reducing component.

6. Method according to claim 5, wherein the reducing agent contains one or more hydrocarbons as reducing component.

7. Method according to any one of the preceding claims, wherein the reducing agent contains one or more compounds with an unsaturated carbon bond as reducing component.

8. Method according to any one of claims 2 to 7, wherein the reducing component is an aldehyde, preferably hydroquinone, resorcinol and/or pyrocatechol, an alcohol and/or a carboxylic acid, preferably ascorbic acid.

9. Method according to any one of the preceding claims, wherein the reducing agent is added to a coolant.

10. Method according to claim 9, wherein the reducing agent is added to a liquid phase of the coolant.

11. Method according to claim 9 or 10, wherein the reducing agent is added to the coolant in a concentration of at least 0.1 µmoles/kg, preferably of at least 0.5 µmoles/kg.

12. Method according to any one of the preceding claims, wherein a first reducing agent or a first component of the reducing agent is used for the liquid-carrying parts of the cooling system and a second reducing agent or a second component of the reducing agent is used for the steam-carrying parts of the cooling system.

13. Method according to any one of the preceding claims, wherein a reducing agent is added at least one further time during the after-cooling operation.

14. Method according to any one of the preceding claims, wherein a lowering of the concentration of the reducing agent in the coolant below a predetermined value, preferably of 0.1 µmoles/kg and especially of 0.5 µmoles/kg is counteracted by make-up of reducing agent.

## Revendications

1. Procédé dans lequel un agent réducteur est introduit dans le système de refroidissement d'un réacteur nucléaire refroidi par eau, **caractérisé en ce que** l'agent réducteur est introduit dans le système de refroidissement lors d'un arrêt du réacteur et/ou d'un mode de post-refroidissement subséquent dudit réacteur, et
l'iode radioactif est lié au moyen de l'agent réducteur pendant l'exécution de travaux de maintenance avec le système de refroidissement ouvert et ainsi empêché de passer dans l'atmosphère.

2. Procédé selon la revendication 1, dans lequel l'agent réducteur est exempt d'halogènes et de soufre.

3. Procédé selon une des revendications précédentes, dans lequel l'agent réducteur contient un ou plusieurs composés organiques comme composant réducteur.

4. Procédé selon la revendication 3, **caractérisé en ce que** le composé a un poids moléculaire inférieur à 300 uma, de préférence inférieure à 250 uma.

5. Procédé selon la revendication 3 ou 4, dans lequel l'agent réducteur contient un ou plusieurs composés qui sont constitués exclusivement de carbone, d'hydrogène et d'oxygène comme composant réducteur.

6. Procédé selon la revendication 5, dans lequel l'agent réducteur contient un ou plusieurs hydrocarbures comme composant réducteur.

7. Procédé selon une des revendications précédentes, dans lequel l'agent réducteur contient un ou plusieurs composés avec une liaison carbone insaturée comme composant réducteur.

8. Procédé selon une des revendications 2 à 7, dans lequel le composant réducteur est un aldéhyde, de préférence de l'hydroquinone, de la résorcine et/ou de la brenzcatéchine, un alcool et/ou un acide carboxylique, de préférence de l'acide ascorbique.

9. Procédé selon une des revendications précédentes, dans lequel l'agent réducteur est ajouté à un agent réfrigérant.

10. Procédé selon la revendication 9, dans lequel l'agent réducteur est ajouté à une phase liquide de l'agent réfrigérant.

11. Procédé selon la revendication 9 ou 10, dans lequel l'agent réducteur est ajouté à l'agent réfrigérant dans une concentration d'au moins 0,1 µmol/kg, de préférence d'au moins 0,5 µmol/kg.

12. Procédé selon une des revendications précédentes, dans lequel un premier agent réducteur ou un premier composant de l'agent réducteur est utilisé pour les parties du système de refroidissement conduisant du liquide et un deuxième agent réducteur ou un deuxième composant de l'agent réducteur pour les parties du système de refroidissement conduisant de la vapeur.

13. Procédé selon une des revendications précédentes, dans lequel de l'agent réducteur est ajouté au moins une fois de plus en mode de post-refroidissement.

14. Procédé selon une des revendications précédentes, dans lequel on s'oppose à une baisse de la concentration d'agent réducteur dans l'agent réfrigérant au-dessous d'une valeur prédéfinie de préférentiellement 0,1 µmol/kg, plus préférentiellement 0,5 µmol/kg, par ajout d'une dose d'agent réducteur.
